# EUROPÄISCHE PATENTSCHRIFT

(11) **EP 1 394 221 B1**
(45) Veröffentlichungstag und Bekanntmachung des Hinweises auf die Patenterteilung: **09.09.2009**
(21) Anmeldenummer: 03013084.3
(22) Anmeldetag: 11.06.2003
(51) Int. Cl.: C09C 1/56, C09C 3/08, C08K 9/04, D01F 11/14

(54) **Kohlenstoffhaltiges Material**
Carbonaceous material
Matériau carboné

(30) Priorität: 15.08.2002 DE 10238149
(43) Veröffentlichungstag der Anmeldung: 03.03.2004
(73) Patentinhaber: Evonik Degussa GmbH, 45128 Essen (DE)
(72) Erfinder: Lütghe, Thomas, Dr., 63454 Hanau (DE); Zoch, Heinz, Dr., 63477 Maintal (DE); McIntosch, Ralph, 63457 Hanau (DE); Bergemann, Klaus, Dr., 50170 Kerpen-Sindorf (DE); Fanghänel, Egon, Prof., 06114 Halle (DE); Knackfuss, Bernd, Dr., 04229 Leipzig (DE)

(56) Entgegenhaltungen:
- EP-A- 1 304 362
- EP-B- 0 569 503
- DATABASE WPI Section Ch, Week 200007 Derwent Publications Ltd., London, GB; Class E21, AN 2000-075826 XP002260385 & JP 11 323229 A (MINOLTA CAMERA KK), 26. November 1999 (1999-11-26)

## Beschreibung

Die Erfindung betrifft ein kohlenstoffhaltiges Material, ein Verfahren zu seiner Herstellung sowie seine Verwendung.

Aus EP 0569503 ist ein Verfahren zur Oberflächenmodifizierung von kohlenstoffhaltigem Material mit aromatischen Gruppen durch elektrochemische Reduktion eines Diazoniumsalzes bekannt.

Weiterhin ist bekannt, kohlenstoffhaltiges Material mit organischen Gruppen zu versehen, indem man die organischen Gruppen über eine Diazotierung mit dem kohlenstoffhaltigen Material verknüpft (WO 96/18688).

Des weiteren ist bekannt, kohlenstoffhaltiges Material mit organischen Gruppen zu versehen, indem man die organischen Gruppen mittels Umsetzungen mit Radikalbildnern (Ohkita K., Tsubokawa N., Saitoh E., Carbon 16 (1978) 41); DE 10012784.3) oder über Cycloadditionen an das kohlenstoffhaltige Material bindet(DE 10012783.5).

Es ist bekannt, kohlenstoffhaltiges Material mit aliphatischen Verbindungen, die Azogruppen besitzen, umzusetzen (JP11315220 A; Tsubokawa N., Kawatsura K., Shirai Y., Int. Conf. Mater. Proc. 11 (1997) 537; Tsubokawa N., Yanadori K., Sone Y., Nippon Gomu Kyokaishi 63 (1990) 268). Die Bindungsbildung zwischen den azogruppenhaltigen Verbindungen und dem kohlenstoffhaltigen Material erfolgt unter Abspaltung von Stickstoff und der Bildung von radikalischen Spezies, die für weitere Reaktionen (Grafting) als Startfunktionen dienen können.

Ebenso ist bekannt, kohlenstoffhaltiges Material durch Umsetzung mit Schwefelsäure oder SO₃ zu modifizieren (US 3519452; JP 2001-254033).

Die bekannten Verfahren haben folgende Nachteile:
◆ Die, neben dem giftigen und brandfördernden Natriumnitrit, ebenfalls zur Diazotierung verwendbaren nichtionischen organischen Nitrite sind giftig und leicht brennbar. Reste der Nitrite (Gegenionen, Alkylreste) verbleiben ungebunden als Verunreinigung im kohlenstoffhaltigen Material.
◆ Zur Durchführung der Diazotierung ist der Einsatz von Nitrit im saurem Medium erforderlich. Dabei können sich giftige Stickstoffoxide bilden.
◆ Radikalbildner sind thermisch beziehungsweise photochemisch labil, explosionsgefährlich und können zu schwer beherrschbaren Kettenreaktionen führen.
◆ Synthese und Reinigung der entsprechenden Vorstufen der Radikalbildner laufen zum Teil über giftige beziehungsweise geruchsbelästigende Stoffe und sind damit hinsichtlich des Herstellverfahrens, des Transports, der Verwendung und abschließenden Entsorgung kostenintensiv.
◆ Die bei Cyclisierungsreaktionen mit Stickstoffheterocyclen ablaufende Stickstoffextrusion kann zu plötzlichen, explosionsartigen Volumenausdehnungen beziehungsweise Druckanstiegen führen, die die Reaktionsführung wesentlich erschweren.
◆ Die Umsetzung von kohlenstoffhaltigem Material mit Verbindungen, welche Azogruppen besitzen und unter Stickstoffextrusion Radikale bilden, kann ebenfalls zu plötzlichen, explosionsartigen Volumenausdehnungen beziehungsweise Druckanstiegen, oder aber zu thermisch schwer beherrschbaren Kettenreaktionen führen und somit die Reaktionsführung erschweren.
◆ Für die Umsetzung von kohlenstoffhaltigem Material mit Schwefelsäure oder Oleum werden besonders widerstandsfähige, korrosions- und temperaturbeständige Materialien benötigt, als Nebenreaktionen können unerwünschte und gefährliche Oxidationen auftreten und durch die notwendige Neutralisation können nach der Umsetzung Abwässer mit hoher Salzfracht anfallen, wobei ein Teil der anfallenden Salze als Verunreinigung auf dem kohlenstoffhaltigen Material zurückbleiben kann, was zu anwendungstechnischen Nachteilen führen kann.

Aufgabe der Erfindung ist es, ein kohlenstoffhaltiges Material mit organischen Gruppen zur Verfügung zu stellen, wobei
- die Modifizierung des kohlenstoffhaltigen Materials so variabel ist, daß die funktionellen Gruppen nah an der Oberfläche und / oder auch sehr weit entfernt sein können,
- die Modifizierung des kohlenstoffhaltigen Materials ohne vorgelagerte Reaktionen, wie Aktivierung durch Starter, abläuft,
- die Umsetzungen mit den erfindungsgemäßen Modifizierungsmitteln rein thermisch ablaufen und keine weiteren Katalysatoren (zum Beispiel Lewissäuren) beziehungsweise andere Aktivierungsvarianten, wie zum Beispiel photochemische Verfahren, benötigt werden,
- auf Grund der chemischen Eigenschaften der erfindungsgemäßen Modifizierungsmittel keine störenden Nebenreaktionen oder schwer zu kontrollierende Kettenreaktionen ablaufen können,
- das resultierende kohlenstoffhaltige Material nicht durch Säuren, Salze und ähnliches verunreinigt ist, so dass keine Reinigung des kohlenstoffhaltigen Materials erforderlich ist,
- das kohlenstoffhaltiges Material nicht mit hohem Energieaufwand getrocknet werden muß,
- keine giftigen Abgase bei der Modifizierung entstehen,
- keine oder nur geringe Mengen leicht entfernbarer Lösemittel erforderlich sind.

Gegenstand der Erfindung ist ein kohlenstoffhaltiges Material mit organischen Gruppen, welches dadurch gekennzeichnet ist, daß dieses erhältlich ist durch die Umsetzung von kohlenstoffhaltigem Material mit organischen Verbindungen der allgemeinen Formel I,

R¹-N=N-R² (I)

wobei R¹ und R² gleich oder verschieden sein können und unsubstituierte oder mit Akzeptor- beziehungsweise Donatorsubstituenten substituierte Arylgruppen sind,

ausgenommen kohlenstoffhaltiges Material mit organischen Gruppen erhältlich durch die Umsetzung von kohlenstoffhaltigem Material mit organischen Verbindungen der Formel 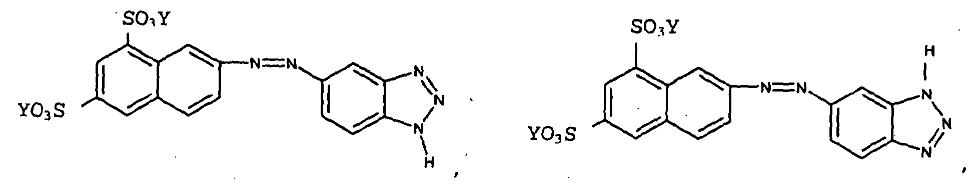 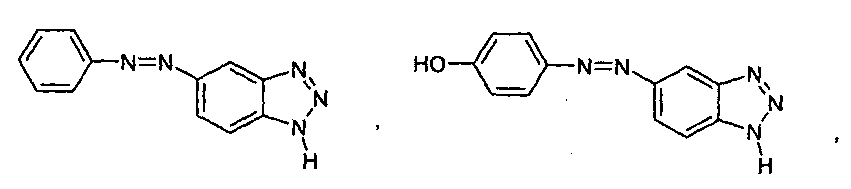 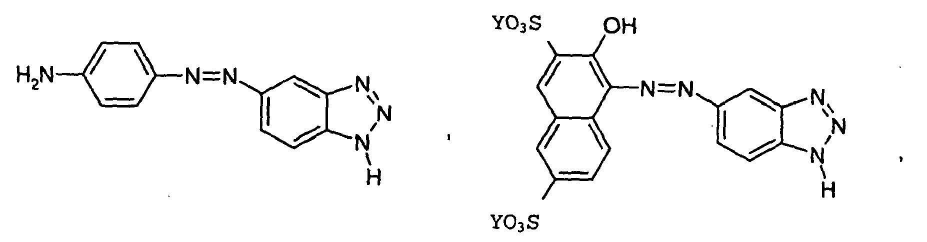 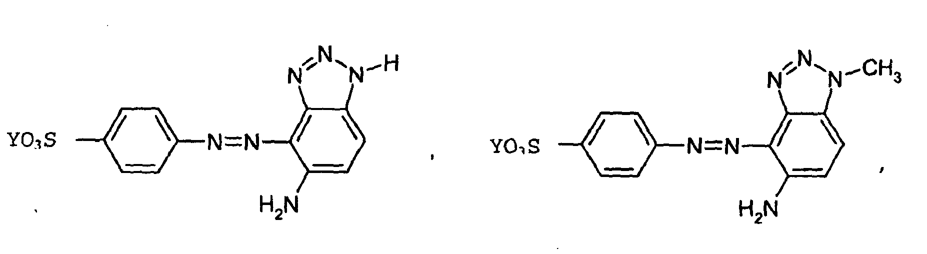 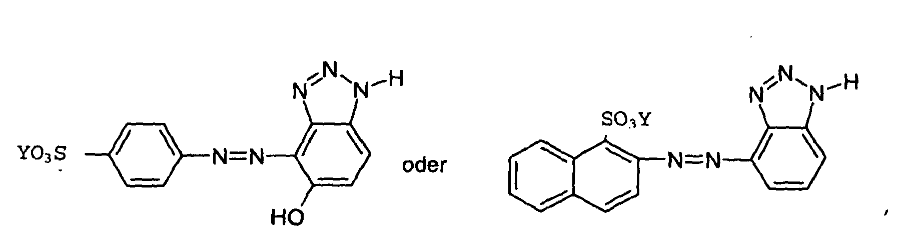 mit Y = H, Metallⁿ⁺ (n = 1-3) oder N⁺R' und R' gleich H, Alkyl, Aryl oder funktionalisiertes Alkyl oder Aryl.

Die Gruppen R¹ und R² können Teile eines cyclischen Systems sein.

Die Akzeptor- beziehungsweise Donatorsubstituenten können hydrophil oder hydrophob sein. Die Struktureinheit der allgemeinen Formel I kann ein- oder mehrfach in der organischen Gruppe enthalten sein.

Akzeptorsubstituenten können -COOR³, -CO-R³, -CN, -SCN, -NCS, -NCO, -SO₂R³ oder -SO₂OR³, mit R³ = H, Alkyl, Aryl oder funktionalisiertes Alkyl oder Aryl, wie zum Beispiel ω-Carboxyalkyl, HSO₃-CₓH_{y}-, H₂N-CₓH_{y}- oder H₂N-SO₂-CₓH_{y}- (x=1-20, y= 2-40), sein.

Donatorsubstituenten können Alkyl- beziehungsweise Arylgruppen, OR⁴, N(R⁴)₂ ,SR⁴, -S-S-R⁴ oder P(R⁴)₂, wobei R⁴ gleich oder verschieden ist und aus H, Alkyl, Aryl, oder funktionalisiertes Alkyl oder Aryl besteht, sein.

Die organischen Gruppen R¹ und R² können:
- substituiert oder unsubstituiert, aromatisch oder heteroaromatisch, verzweigt oder unverzweigt sein,
- eine aliphatische Gruppe enthalten, beispielsweise Reste aus Alkanen, Alkenen, Alkoholen, Ethern, Aldehyden, Ketonen, Carbonsäuren, Carbonsäureestern, Carbonsäureamiden, Kohlenwasserstoffen, Sulfonsäuren, Trialkylammonium-, Trialkylphosphonium- oder Dialkylsulfonium-,
- eine cyclische Verbindung enthalten, beispielsweise alicyclische Kohlenwasserstoffe, wie zum Beispiel Cycloalkyle oder Cycloalkenyle, heterocyclische Verbindungen, wie zum Beispiel Pyrrolidinyl-, Pyrrolinyl-, Piperidinyl- oder Morpholinyl-, Arylgruppen, wie zum Beispiel Phenyl-, Naphthyl- oder Anthracenyl- und Heteroarylgruppen, wie zum Beispiel Imidazolyl-, Pyrazolyl-, Pyridinyl-, Thienyl-, Thiazolyl-, Furyl- oder Indolyl-,
- durch weitere funktionelle Gruppen substituiert sein,
- eine chromophore Gruppe oder ein Farbstoff oder Teile davon sein,
- geeignete reaktive Verbindungen, wie zum Beispiel Triarylammonium-, Triarylphosphonium-, Diarylsulfoniumoder Aryliodonium-, tragen.

Die Substituenten des erfindungsgemäßen kohlenstoffhaltigen Materials mit organischen Gruppen können dabei auf die potentiellen Anwendungsgebiete maßgeschneidert werden, da das gefundene Reaktionsprinzip, beispielsweise sowohl die Einführung von hydrophilen, wie auch von lipophilen Substituenten, gestattet. Die Substituenten können auch ionisch, polymer oder für weitere Reaktionen reaktiv sein. Über die Substituenten können unterschiedliche, anwendungstechnisch hoch interessante Eigenschaften des kohlenstoffhaltigen Materials gezielt verändert werden. So kann zum Beispiel die Hydrophilie des kohlenstoffhaltigen Materials so weit gesteigert werden, daß das kohlenstoffhaltige Material ohne Verwendung eines Netzmittels in wässrigen Medien stabile Dispersionen bildet.

Geeignete erfindungsgemäße Azoverbindungen können sein: 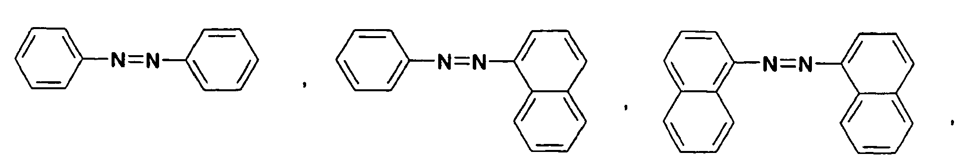 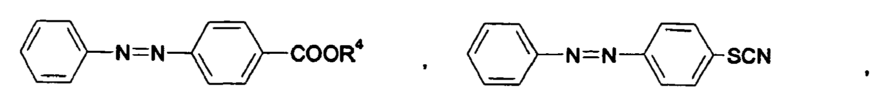 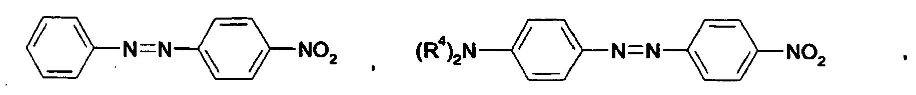 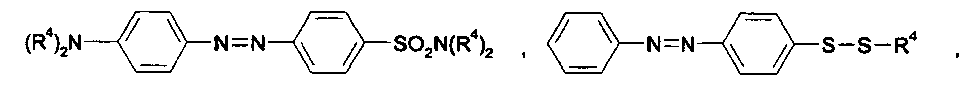 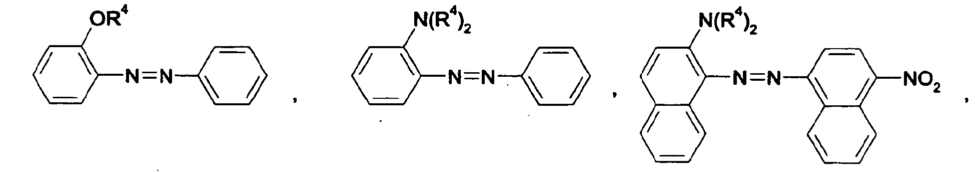 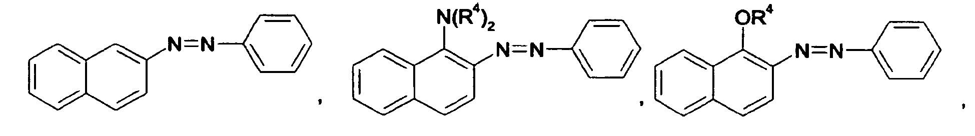 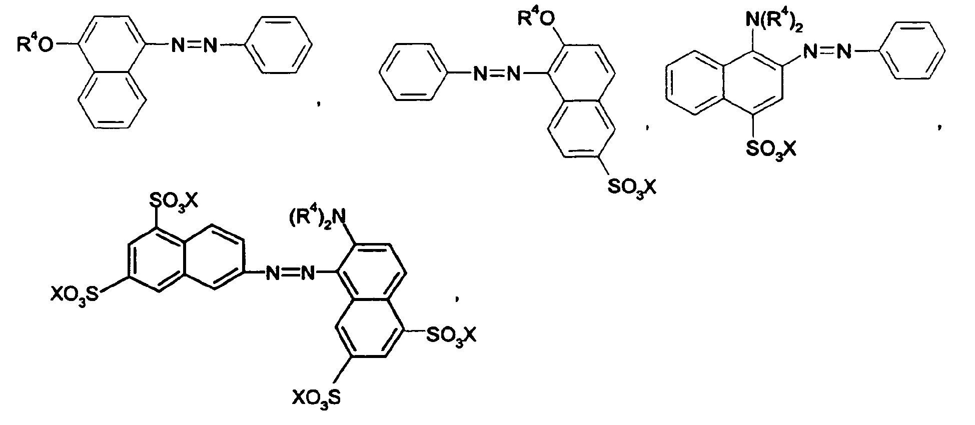 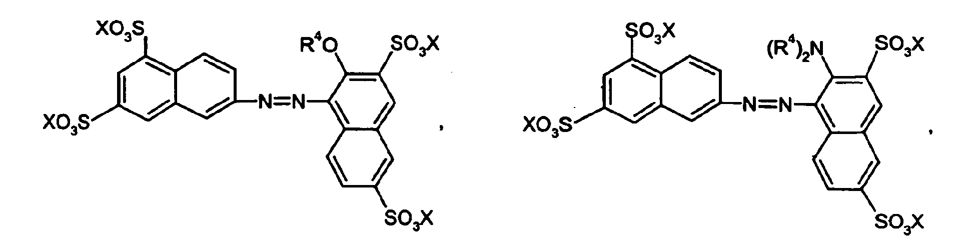 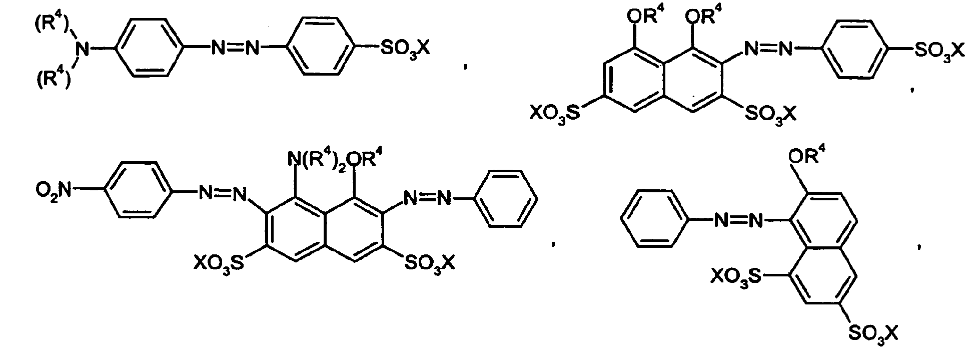 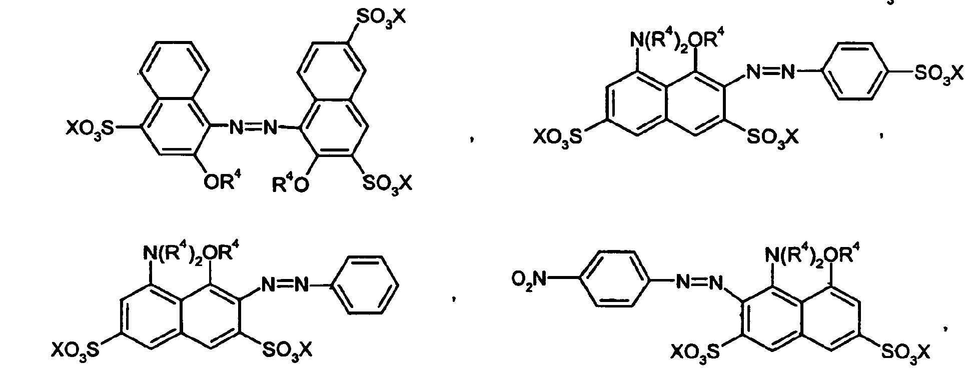 oder 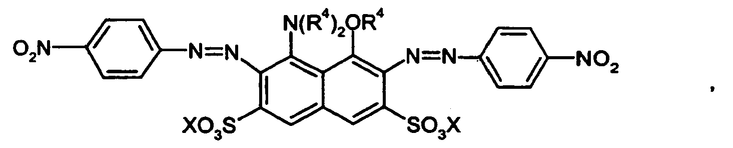 mit X = H, Alkaliionen oder Ammoniumionen

Als kohlenstoffhaltiges Material können Ruß, Graphitpulver, Graphitfasern, Kohlenstofffasern, Kohlenstofffibrillen, Kohlenstoffnanoröhren (Carbon Nanotubes), Kohlenstoffgewebe, glasartige Kohlenstoffprodukte, Aktivkohle, Kohle, Koks oder Diamant verwendet werden.

Als kohlenstoffhaltiges Material kann jeder bekannte Ruß, wie zum Beispiel Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 19613796, oder metallhaltige Ruße, bekannt aus WO 98/42778, Lichtbogenruße und kohlenstoffhaltige Materialien, die Nebenprodukte chemischer Produktionsprozesse sind, verwendet werden.

Es können kohlenstoffhaltige Materialien, die als Verstärkerfüllstoff in Kautschukmischungen verwendet werden, eingesetzt werden. Es können Pigmentruße eingesetzt werden. Weitere kohlenstoffhaltige Materialien können sein: leitfähiges kohlenstoffhaltiges Material, kohlenstoffhaltiges Material zur UV-Stabilisierung, kohlenstoffhaltiges Material als Füllstoff in anderen Systemen als Kautschuk, wie zum Beispiel in Bitumen, Kunststoff, kohlenstoffhaltiges Material als Reduktionsmittel in der Metallurgie.

Das kohlenstoffhaltige Material kann durch vorgelagerte Reaktionen aktiviert werden.

Ein weiterer Gegenstand der Erfindung ist ein Verfahren zur Herstellung des erfindungsgemäßen kohlenstoffhaltigen Materials mit organischen Gruppen, welches dadurch gekennzeichnet ist, daß man kohlenstoffhaltiges Material mit organischen Verbindungen der allgemeinen Formel I umsetzt.

Die organische Verbindung der allgemeinen Formel I kann auf das kohlenstoffhaltige Material aufgebracht werden durch Einmischen oder Aufsprühen. Die organische Verbindung der allgemeinen Formel I kann als Pulver, Schmelze oder Lösung aufgebracht werden. Besonders vorteilhaft kann die Aufbringung der organischen Verbindung während der Herstellung des kohlenstoffhaltigen Materials sein, wobei die Zugabe der organischen Verbindung der allgemeinen Formel I vorzugsweise an einem Ort erfolgt, der die notwendige Temperatur aufweist. Die Umsetzung des kohlenstoffhaltigen Materials kann vorzugsweise lösungsmittelfrei, aber auch in einem Lösungsmittel, vorzugsweise leicht flüchtigen organischen Lösungsmittel, durchgeführt werden. Die Reaktion zur Modifizierung des kohlenstoffhaltigen Materials kann bei Temperaturen von -80° bis 250°C, vorzugsweise von 80° bis 250°C, durchgeführt werden. Erfolgt die Umsetzung während der Herstellung des kohlenstoffhaltigen Materials, so können die Temperaturen zwischen 250° und 1500°C liegen.

Die Umsetzung des kohlenstoffhaltigen Materials mit der organischen Verbindung der allgemeinen Formel I kann in einem Mengenverhältnis von 99,99 : 0,01 bis 0,01 : 99,99, vorzugsweise 50:1 bis 1:50, erfolgen.

Die Umsetzung des kohlenstoffhaltigen Materials mit der organischen Verbindung der allgemeinen Formel I kann man in einem Druckbereich von 1 mbar bis 250 bar, vorzugsweise von 100 mbar bis 50 bar, durchführen.

Ein weiterer Gegenstand der Erfindung ist eine Dispersion, welche dadurch gekennzeichnet ist, dass diese das erfindungsgemäße kohlenstoffhaltige Material mit organischen Gruppen enthält.

Dabei können die organischen Gruppen auf das jeweilige Medium maßgeschneidert werden.

So können die kohlenstoffhaltigen Materialien mit polaren organischen Gruppen besonders geeignet sein für polare Medien. Polare Medien können Lösungsmittel, wie zum Beispiel Alkohole, Ketone, Ester, Säuren, Amine, halogenierte Lösungsmittel oder Oligomere beziehungsweise Polymere mit polaren Gruppen, wie zum Beispiel Carbonyl-, Ester-, Amino-, Carboxyl- und/oder Hydroxylgruppen, sein. Für wässrige Medien können kohlenstoffhaltige Materialien mit beispielsweise -SO₃X, COOX, OH (mit X = H, Alkaliionen, Ammoniumionen) besonders gut geeignet sein.

Für hydrophobe Medien, wie aliphatische, aromatische, heteroaliphatische und/oder heteroaromatische Kohlenwasserstoffe, können kohlenstoffhaltige Materialien mit hydrophoben Gruppen, wie beispielsweise Alkyl, Alkyloxy, Aryl und/oder Hetaryl, verwendet werden.

Für Medien, die hinsichtlich ihrer Polarität zwischen den relativ unpolaren, hydrophoben Medien und den stark polaren Medien liegen, beispielsweise Ether und/oder Gemische aus unpolaren und polaren Medien, können speziell abgestimmte organische Gruppen, zum Beispiel Amino-, Carbonyl- oder Halogensubstituenten, verwendet werden.

Die erfindungsgemäßen Dispersionen können zusätzlich ein oder mehrere Additive enthalten. Diese Additive, beispielsweise monomere, oligomere oder polymere Verbindungen, können bei spezielle Anwendungen zugesetzt werden. Diese Additive können Eigenschaften wie Dispergiergrad, Lagerstabilität, Gefrierstabilität, Trocknungsverhalten, Filmbildungsvermögen, Vernetzbarkeit und/oder die Anbindung an bestimmte Trägermaterialien, wie Papier, Metall, Glas, Polymere, Fasern, Leder, Holz, Beton oder Kautschuk, verbessern.

Die erfindungsgemäßen kohlenstoffhaltigen Materialien mit organischen Gruppen können beispielsweise als Füllstoff, Verstärkerfüllstoff, UV-Stabilisator, Leitfähigkeitsruß oder Pigment verwendet werden.

Die erfindungsgemäßen kohlenstoffhaltigen Materialien mit organischen Gruppen können in Kautschuk, Kunststoff, Druckfarben, Tinten, Inkjet-Tinten, Tonern, Lacken, Farben, Papier, Bitumen, Beton und anderen Baustoffen eingesetzt werden. Sie können als Reduktionsmittel in der Metallurgie angewendet werden.

Die erfindungsgemäßen kohlenstoffhaltigen Materialien können zur Herstellung von Gummimischungen, insbesondere zur Herstellung von Reifen, verwendet werden.

Die erfindungsgemäßen kohlenstoffhaltigen Materialien mit organischen Gruppen weisen den Vorteil auf, daß
- polar modifizierte kohlenstoffhaltige Materialien (zum Beispiel mit -SO₃⁻ Gruppen) besser in polaren Systemen, vorrangig Wasser, dispergierbar sind,
- unpolar modifizierte kohlenstoffhaltige Materialien (zum Beispiel mit Alkylgruppen) besser in unpolaren Systemen, wie zum Beispiel Ölen, dispergierbar sind,
- geeignet modifizierte kohlenstoffhaltige Materialien mit polaren oder sterisch sperrigen Gruppen in den Systemen elektrostatisch, beziehungsweise sterisch stabilisiert werden und zur Stabilisierung keine weiteren Hilfsstoffe wie zum Beispiel Netzmittel notwendig sind,
- nach dem erfindungsgemäßen Verfahren modifizierte kohlenstoffhaltige Materialien besser in Dispersionen stabilisiert sind und dadurch niedrigere Viskositäten hervorrufen und bessere koloristische Eigenschaften, wie Farbtiefe und Blaustichigkeit, aufweisen,
- kohlenstoffhaltiges Material mit gebundenen Farbstoffen veränderte Farbtöne aufweisen,
- kohlenstoffhaltiges Material mit weiterhin reaktiven Substituenten zur Kopplung und Vernetzung in Systemen (zum Beispiel Kautschuk), genutzt werden können,
- reaktiv modifizierte kohlenstoffhaltige Materialien eine Anbindung des kohlenstoffhaltigen Materials an das Polymer ermöglichen,
- kohlenstoffhaltiges Material dabei arm an Nebenprodukten, Salzen, Säuren und Feuchtigkeit hergestellt werden können.

### Beispiele:

### Beispiel 1:

### Synthese von 8-Amino-2,7-bis(4'-nitrobenzolazo)-1-naphthol-3,6-disulfonsäure Dinatriumsalz (1)

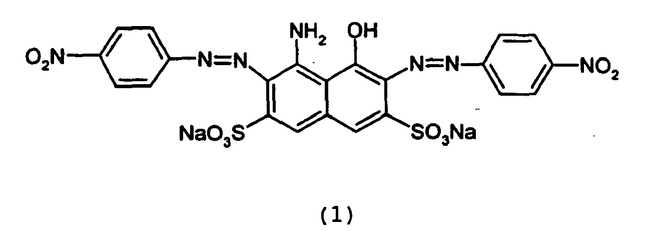

0,01 Mol 1-Amino-8-naphthol-3,6-disulfonsäure werden in 150 ml Wasser gelöst und anschließend mit 8 g Natriumacetat und 8 g Eisessig versetzt. Das Gemisch wird auf 10°C abgekühlt. Bei dieser Temperatur werden 0,022 Mol Diazoniumsalz des 4-Nitroanilins ("Organikum", 19. Auflage, S. 560, Verlag Johann Ambrosius Barth Leipzig) langsam zugeben. Dann wird über Nacht gerührt und danach 200 ml Wasser zugegeben und mit Natriumchlorid ausgesalzt. Das Produkt wird abgesaugt und im Eksikkator getrocknet.

### Beispiel 2

### Synthese von 2-Amino-1- (naphthyl-2'-azo)-naphthyl-5,5',7,7'-tetrasulfonsäure Tetranatriumsalz (2)

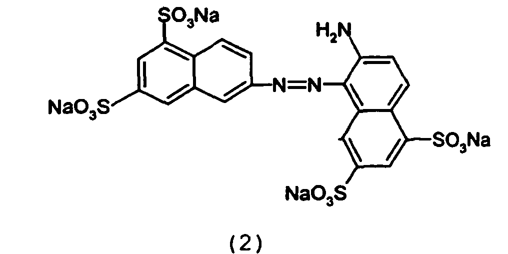

3 g Diazoniumsalz der 2-Naphthylamin-6,8-disulfonsäure ("Organikum", 19. Auflage, S. 560, Verlag Johann Ambrosius Barth Leipzig) werden bei 10° C in 120 ml einer wässrigen Suspension von 2,7 g 2-Naphthylamin-6,8-disulfonsäure und 3g Natriumacetat gegeben, wobei anschließend unter Rühren 2ml Essigsäure zugetropft werden. Nach 24-stündigem Rühren wird das Produkte mit Ethanol ausgefällt, abgesaugt und im Eksikkator getrocknet.

### Beispiel 3

### Synthese von 2-Hydroxy-1- (naphthyl-2'-azo)-naphthyl-3,6,5',7'-tetrasulfonsäure Tetranatriumsalz (3)

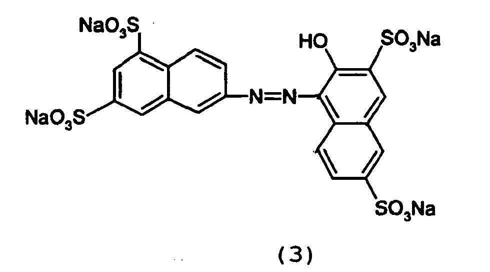

3 g Diazoniumsalz der 2-Naphthylamin-6,8-disulfonsäure ("Organikum", 19. Auflage S. 560, Verlag Johann Ambrosius Barth Leipzig) werden bei 10° C in 120 ml einer wässrigen Suspension von 2,7 g 2-Naphthol-3,6-Disulfonat-natrium und 3g Natriumacetat gegeben, wobei anschließend unter Rühren 2ml Essigsäure zugetropft werden. Nach 24-stündigem Rühren wird das Produkt mit Ethanol ausgefällt, abgesaugt und im Eksikkator getrocknet.

### Beispiel 4:

### Umsetzung von Ruß mit Azoverbindungen

Die Herstellung der Mischung aus Azoverbindung und Ruß erfolgt entweder durch Einarbeitung des Rußes in eine Lösung der Azoverbindung, anschließendes einstündiges Rühren bei RT und Abdampfen des Lösungsmittels im Trockenschrank (Variante 1) oder durch Mischen in einem Mischer (Variante 2). Anschließend wird das Gemisch 10 h bei 250 °C in einem Trockenschrank ohne Umluft getempert, beziehungsweise in einer Mikrowelle 3 mal 1 Minute bei 700 Watt mit Mikrowellenstrahlung bestrahlt. Die Beispiele der erfindungsgemäßen kohlenstoffhaltigen Materialien mit organischen Gruppen sind in Tabelle 1a und 1b zusammengefaßt.

**Tabelle 1a**

| Nr. | Ruß | Azoverbindung | Mischungsherstellung nach Variante | Lösungsmittel | Reaktor |
|---|---|---|---|---|---|
| 1 | FW 18 | Naphtholblauschwarz (CI 20470) | 1 | Wasser | Trockenschrank |
| 2 | FW 18 | Naphtholblauschwarz (CI 20470) | 2 | - | Mikrowelle |
| 3 | NiPex 160 IQ | Naphtholblauschwarz (CI 20470) | 1 | Wasser | Mikrowelle |
| 4 | NiPex 160 IQ | Naphtholblauschwarz (CI 20470) | 2 | - | Trockenschrank |
| 5 | FW 18 | Orange G (CI 16230) | 1 | Wasser | Trockenschrank |
| 6 | FW 18 | Orange G (CI 16230) | 2 | - | Mikrowelle |
| 7 | FW 18 | Orange G (CI 16230) | 1 | Wasser | Mikrowelle |
| 8 | FW 18 | Orange G (CI 16230) | 2 | - | Trockenschrank |
| 9 | FW 18 | Methylorange (CI 13025) | 1 | Wasser | Trockenschrank |
| 10 | FW 18 | Methylorange (CI 13025) | 2 | - | Mikrowelle |
| 11 | FW 18 | Methylorange (CI 13025) | 1 | Wasser | Mikrowelle |
| 12 | FW 18 | Methylorange (CI 13025) | 2 | - | Trockenschrank |
| 13 | FW 18 | Hydroxynaphtholblau | 1 | Wasser | Trockenschrank |
| 14 | FW 18 | Hydroxynaphtholblau | 2 | - | Mikrowelle |
| 15 | FW 18 | Hydroxynaphtholblau | 1 | Wasser | Mikrowelle |
| 16 | FW 18 | Hydroxynaphtholblau | 2 | - | Trockenschrank |
| 17 | FW 18 | Sulfanilazochromotrop | 1 | Wasser | Trockenschrank |
| 18 | FW 18 | Sulfanilazochromotrop | 2 | - | Mikrowelle |
| 19 | FW 18 | Sulfanilazochromotrop | 1 | Wasser | Mikrowelle |
| 20 | FW 18 | Sulfanilazochromotrop | 2 | - | Trockenschrank |
| 21 | FW 18 | Azobenzol | 1 | Toluol | Trockenschrank |
| 22 | FW 18 | Azobenzol | 2 | - | Mikrowelle |
| 23 | FW 18 | Azobenzol | 1 | Toluol | Mikrowelle |
| 24 | FW 18 | Azobenzol | 2 | - | Trockenschrank |
| 25 | FW 18 | Azobenzol-4-Carbonsäure | 1 | Wasser | Trockenschrank |
| 26 | FW 18 | Azobenzol-4-Carbonsäure | 2 | - | Mikrowelle |

**Tabelle 1b**

| Nr. | Ruß | Azoverbindung | Mischungsherstellung nach Variante | Lösungsmittel | Reaktor |
|---|---|---|---|---|---|
| 27 | FW 18 | Azobenzol-4-Carbonsäure | 1 | Wasser | Mikrowelle |
| 28 | FW 18 | Azobenzol-4-Carbonsäure | 2 | - | Trockenschrank |
| 29 | Printex 95 | 4-Sulfonamido-azobenzol ¹⁾ | 1 | Aceton | Trockenschrank |
| 30 | Printex 95 | 4-Sulfonamido-azobenzol ¹⁾ | 2 | - | Mikrowelle |
| 31 | Printex 95 | 4-Sulfonamido-azobenzol ¹⁾ | 1 | Aceton | Mikrowelle |
| 32 | Printex 95 | 4-Sulfonamido-azobenzol ¹⁾ | 2 | - | Trockenschrank |
| 33 | N 220 | 4-Rhodano-azobenzol ²⁾ | 1 | Aceton | Trockenschrank |
| 34 | N 220 | 4-Rhodano-azobenzol ²⁾ | 2 | - | Mikrowelle |
| 35 | N 220 | 4-Rhodano-azobenzol ²⁾ | 1 | Aceton | Mikrowelle |
| 36 | N 220 | 4-Rhodano-azobenzol ²⁾ | 2 | - | Trockenschrank |
| 37 | FW 18 | Azoverbindung gemäß Beispiel 1 | 1 | Wasser | Trockenschrank |
| 38 | FW 18 | Azoverbindung gemäß Beispiel 1 | 2 | - | Mikrowelle |
| 39 | NiPex 160 IQ | Azoverbindung gemäß Beispiel 1 | 1 | Wasser | Mikrowelle |
| 40 | NiPex 160 IQ | Azoverbindung gemäß Beispiel 1 | 2 | - | Trockenschrank |
| 41 | FW 18 | Azoverbindung gemäß Beispiel 2 | 1 | Wasser | Trockenschrank |
| 42 | FW 18 | Azoverbindung gemäß Beispiel 2 | 2 | - | Mikrowelle |
| 43 | NiPex 160 IQ | Azoverbindung gemäß Beispiel 2 | 1 | Wasser | Mikrowelle |
| 44 | NiPex 160 IQ | Azoverbindung gemäß Beispiel 2 | 2 | - | Trockenschrank |
| 45 | FW 18 | Azoverbindung gemäß Beispiel 3 | 1 | Wasser | Trockenschrank |
| 46 | FW 18 | Azoverbindung gemäß Beispiel 3 | 2 | - | Mikrowelle |
| 47 | NiPex 160 IQ | Azoverbindung gemäß Beispiel 3 | 1 | Wasser | Mikrowelle |
| 48 | NiPex 160 IQ | Azoverbindung gemäß Beispiel 3 | 2 | - | Trockenschrank |
| 49 | Printex 35 | Bis-[4,4'-(diisobutylamino)]-azobenzol ³⁾ | 1 | Toluol | Trockenschrank |
| 50 | Printex 35 | Bis-[4,4'-(diisobutylamino)]-azobenzol ³⁾ | 2 | - | Mikrowelle |
| 51 | Printex 35 | Bis-[4,4'-(diisobutylamino)]-azobenzol ³⁾ | 1 | Toluol | Mikrowelle |
| 52 | Printex 35 | Bis-[4,4'-(diisobutylamino)]-azobenzol ³⁾ | 2 | - | Trockenschrank |

| | | | | | |
|---|---|---|---|---|---|
| ¹⁾ nach Chrzaszczewska et al, Rocz. Chem. 17 (1937) 411 ²⁾ nach Badger et al, J. Chem. Soc. (1953) 2147 ³⁾ nach Lippmann Chem. Ber. 15 (1882) 2163 | | | | | |

Die Ruße FW 18 und NiPex 160 IQ sind Gasruße der Firma Degussa AG. Die Ruße Printex 35, Printex 95 und N 220 sind Furnaceruße der Firma Degussa AG.

### Beispiel 5:

### Herstellung und Charakterisierung von erfindungsgemäßen Dispersionen

Die mittlere Teilchengröße und das Zetapotential werden mit der Photonen-Korrelations-Spektroskopie (PCS) bestimmt. Das Zetapotential, das den Ladungszustand der Teilchen beschreibt, gibt einen Hinweis auf die Stabilität der Dispersion.

Als Gerät wird ein Photonenkorrelationsspektrometer Nicomp N370 (Fa. Hiac/Royco) mit Küvetten (Einmalküvetten 10 mm) verwendet. Die Messung erfolgt in einer 1 % AMP 90-Lösung (angesetzt mit Reinstwasser / AMP 90 ist 2-Amino-2-methyl-1-propanol-Lösung der Firma Angus Chemie). Diese Lösung wird in der Einmalküvette vorgelegt und einige Tropfen der Probensuspension dazupipettiert, bis eine Intensität (Geräteanzeige bei Sensitivity 150) von 300 (± 50) kHz erreicht ist oder die Intensität trotz Probenzugabe nicht mehr ansteigt. Eine zu hohe Probenkonzentration ist zu vermeiden. Die Messung wird im Automodus gestartet. Die Meßzeit beträgt in der Regel 40 min. Die Auswertung erfolgt mit der Gauß-Anlayse (Volumenverteilung). Ist der Wert für BASELINE ADJUST > 1 oder die Messung noch nicht ausreichend stabil (> 5%/10 min), wird die Meßzeit verlängert. Die Messung wird als Doppelbestimmung durchgeführt. Die Spanne der Mean-Werte sollte <10% betragen.

Das Zetapotential wird mit einem MBS-8000 der Firma Matec bestimmt. Die optimale Volumenkonzentration für die Messung liegt zwischen 2 und 3 Vol.-%.

Der pH-Wert wird direkt in der Rußdispersion mit einer handelsüblichen Meßelektrode bestimmt.

Der Stabilitätstest wird wie folgt durchgeführt:

Die Dispersion wird 28 Tage bei Raumtemperatur gelagert, danach bis -30 °C eingefroren und auf 70 °C aufgeheizt. Vor- und nachher wird die Viskosität als Maß für die Stabilität bestimmt.

Der Dispergiergrad wird mikroskopisch eingeschätzt. Dazu wird die unverdünnte Dispersion mittels eines Lichtmikroskops der Fa. Nikon bei einer 400-fachen Vergrößerung beobachtet. Sind unter diesen Bedingungen keine diskreten Teilchen zu beobachten, entspricht die Dispersion bezüglich des Dispergiergrades den Anforderungen.

### Herstellung von wäßrigen Dispersionen

15% kohlenstoffhaltiges Material mit organischen Gruppen (Beispiel 3 Nr. 1 - 20; 25 - 28; 37 - 48) werden mit 0,3% Biozid (Acticide MBS der Firma Thor Chemie) versetzt und die Mischung mit Wasser auf 100% aufgefüllt. Mit einem Dispergieraggregat Ultra Turrax T50 und einem Dispergierstab wird daraus eine Vordispersion hergestellt. Die Weiterverarbeitung erfolgt im kontinuierlichen Ultraschall Dispergator (Dr.Hielscher GmbH Modell UIP 500).

Nach der Dispergierung wird mittels Basenzugabe, wie zum Beispiel AMP 90 (Fa. Angus Chemie), ein pH-Wert zwischen 7 und 9 eingestellt. In Tabelle 2 sind die analytischen Daten einiger wäßriger Dispersionen dargestellt.

**Tabelle 2**

| Dispersion Nr. | kohlenstoffhaltiges Material mit organischen Gruppen gemäß Beispiel 3 Nr. | Dispergiergrad | mittlere Teilchengröße [nm] | Zetapotential [mV] | Viskosität nach 1 Tag [cPs] | Viskosität nach 28 Tage [cPs] |
|---|---|---|---|---|---|---|
| 1 | 1 | * | 75 | - 52 | 2,19 | 2,44 |
| 2 | 7 | * | 96 | - 48 | 3,97 | 5,01 |
| 3 | 10 | * | 81 | - 53 | 2,38 | 3,22 |
| 4 | 37 | * | 90 | - 40 | 2,65 | 2,78 |
| 5 | 48 | * | 71 | - 47 | 2,42 | 2,57 |

| | | | | | | |
|---|---|---|---|---|---|---|
| *Entspricht Anforderungen (siehe oben) | | | | | | |

### Herstellung lösungsmittelhaltiger Dispersionen

15 - 30% kohlenstoffhaltige Materialien mit organischen Gruppen (Beispiel 3 Nr. 21 - 24; 29 - 36; 49 - 52) werden mit Lösungsmittel, wie Toluol, Methanol und Essigsäure-(2-butoxyethylester), auf 100% aufgefüllt. Mit einem Dispergieraggregat Ultra Turrax T50 und einem Dispergierstab wird daraus eine Vordispersion hergestellt. Die Weiterverarbeitung erfolgt im kontinuierlichen Ultraschall Dispergator (Dr.Hielscher GmbH Modell UIP 500). In Tabelle 3 sind die analytischen Daten einiger lösungsmittelhaltiger Dispersionen dargestellt.

**Tabelle 3**

| Dispersion Nr. | kohlenstoffhaltiges Material mit organischen Gruppen gemäß Beispiel 3 Nr. | Lösungsmittel | Dispergiergrad |
|---|---|---|---|
| 6 | 21 | Toluol | * |
| 7 | 22 | Essigsäure-(2-butoxyethylester) | * |
| 8 | 23 | Toluol | * |
| 9 | 24 | Essigsäure-(2-butoxyethylester) | * |
| 10 | 29 | Methanol | * |
| 11 | 30 | Essigsäure-(2-butoxyethylester) | * |
| 12 | 31 | Methanol | * |
| 13 | 32 | Essigsäure-(2-butoxyethylester) | * |
| 14 | 33 | Toluol | * |
| 15 | 34 | Essigsäure-(2-butoxyethylester) | * |
| 16 | 35 | Toluol | * |
| 17 | 36 | Essigsäure-(2-butoxyethylester) | * |
| 18 | 49 | Toluol | * |
| 19 | 50 | Essigsäure-(2-butoxyethylester) | * |
| 20 | 51 | Toluol | * |
| 21 | 52 | Essigsäure-(2-butoxyethylester) | * |

| | | | |
|---|---|---|---|
| *Entspricht Anforderungen (siehe oben) | | | |

### Beispiel 6

### Anwendungstechnische Tests in wäßrigen Inkjet Formulierungen

Basierend auf den erfindungsgemäßen wäßrigen Dispersionen werden zu Testzwecken Inkjet Tinten formuliert. Hierfür werden die Dispersionen mit Zusatzstoffen versetzt und mit einem Deskjet 970 cxi der Firma Hewlett-Packard verdruckt. Andruckverhalten und Druckbild werden optisch eingeschätzt und die optische Dichte (OD) mit einem Macbeth RD 918 Densitometer an Prüfdrucken bestimmt. Die Druckergebnisse der Tinten in Tabelle 4 basieren auf den Dispersionen aus Tabelle 2.

Bestandteile der Tinte sind:
- 5 Gew.-% 1,2-Propandiol,
- 12 Gew.-% 2-Pyrrolidon,
- 0,02 Gew.-% Surfynol 465 (Fa. Air Products),
- 3,0 Gew.-% Liponic EG-07 (Fa. Permcos GmbH),
- 76 Gew.-% deionisiertes Wasser,
- 5 Gew.-% erfindungsgemäßes kohlenstoffhaltiges Material mit organischen Gruppen.

**Tabelle 4**

| Dispersion gemäß Beispiel 4 Nr. | Andruckverhalten | Druckbild | OD Kopierpapier | OD HP 51634Z | OD Epson 720dpi | OD Canon HR101 | OD Schoeller |
|---|---|---|---|---|---|---|---|
| 1 | feine Streifen am Start, dann ohne Probleme | 2 | 1,48 | 1,47 | 1,59 | 1,46 | 1,47 |
| 2 | feine Streifen am Start, dann ohne Probleme | 1 | 1,49 | 1,52 | 1,56 | 1,54 | 1,51 |
| 3 | Problemlos | 1 | 1,56 | 1,57 | 1,61 | 1,60 | 1,51 |
| 4 | Problemlos | 1 | 1,51 | 1,57 | 1,59 | 1,61 | 1,53 |
| 5 | Problemlos | 1 | 1,56 | 1,54 | 1,68 | 1,64 | 1,56 |

## Patentansprüche

1. Kohlenstoffhaltiges Material mit organischen Gruppen, **dadurch gekennzeichnet, daß** dieses erhältlich ist durch die Umsetzung von kohlenstoffhaltigem Material mit organischen Verbindungen der allgemeinen Formel I,
R¹-N=N-R² (I)
wobei R¹ und R² gleich oder verschieden sein können und unsubstituierte oder mit Akzeptor- beziehungsweise Donatorsubstituenten substituierte Arylgruppen sind, ausgenommen kohlenstoffhaltiges Material mit organischen Gruppen erhältlich durch die Umsetzung von kohlenstoffhaltigem Material mit organischen Verbindungen der Formel 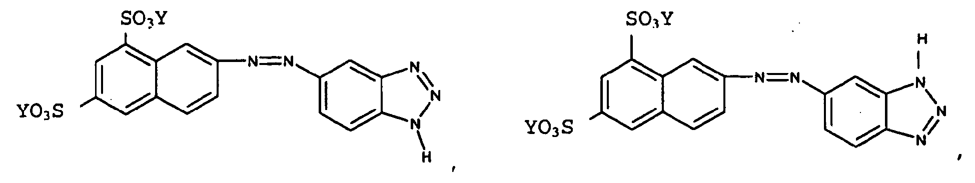 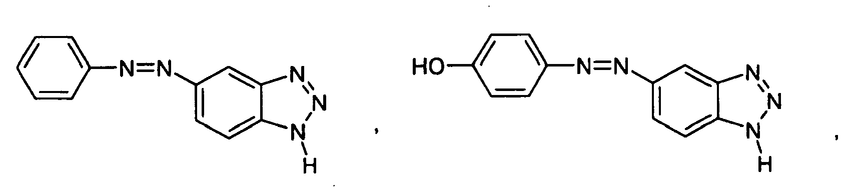 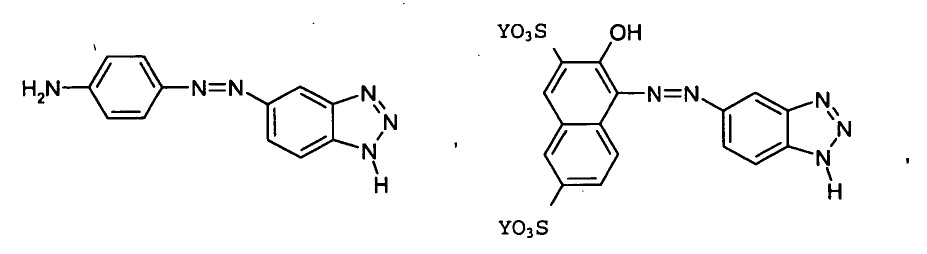 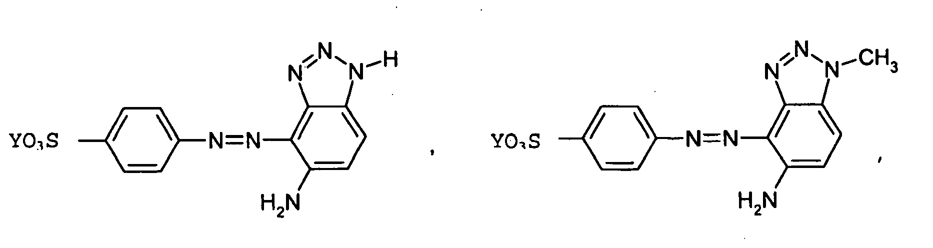 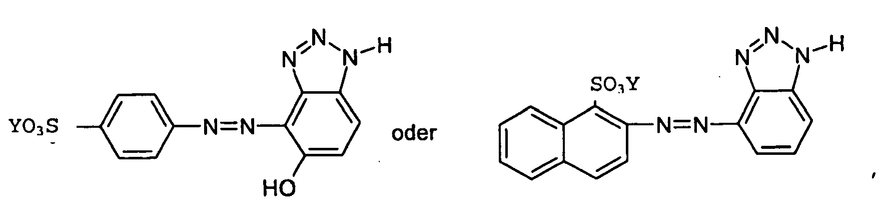 mit Y = H, Metallⁿ⁺ (n = 1-3) oder N⁺R' und R' gleich H, Alkyl, Aryl oder funktionalisiertes Alkyl oder Aryl.

2. Kohlenstoffhaltiges Material mit organischen Gruppen nach Anspruch 1, **dadurch gekennzeichnet, daß** die Akzeptorsubstituenten -COOR³, -CO-R³, -CN, -SCN, -NCS, - NCO, -SO₂R³, -SO₂OR³, mit R³ = H, Alkyl, Aryl oder funktionalisiertes Alkyl oder Aryl, sind.

3. Kohlenstoffhaltiges Material mit organischen Gruppen nach Anspruch 1, **dadurch gekennzeichnet, daß** die Donatorsubstituenten Alkyl- beziehungsweise Arylgruppen, OR⁴, N(R⁴)₂, SR⁴, -S-S-R⁴ oder P(R⁴)₂, wobei R⁴ gleich oder verschieden ist und aus H, Alkyl, Aryl oder funktionalisiertes Alkyl oder Aryl besteht, sind.

4. Verfahren zur Herstellung des kohlenstoffhaltigen Materials mit organischen Gruppen nach Anspruch 1, **dadurch gekennzeichnet, daß** man kohlenstoffhaltiges Material mit organischen Verbindungen der allgemeinen Formel I umsetzt.

5. Dispersion, **dadurch gekennzeichnet, dass** diese das kohlenstoffhaltige Material mit organischen Gruppen nach Anspruch 1 enthält.

6. Dispersion nach Anspruch 5, **dadurch gekennzeichnet, dass** diese Additive enthält.

7. Verwendung des kohlenstoffhaltigen Materials mit organischen Gruppen nach Anspruch 1 als Füllstoff, Verstärkerfüllstoff, UV-Stabilisator, Leitfähigkeitsruß oder Pigment.

8. Verwendung des kohlenstoffhaltigen Materials mit organischen Gruppen nach Anspruch 1 in Kautschuk, Kunststoff, Druckfarben, Tinten, Inkjet-Tinten, Tonern, Lacken, Farben, Papier, Bitumen, Beton und anderen Baustoffen.

9. Verwendung des kohlenstoffhaltigen Materials mit organischen Gruppen nach Anspruch 1 in Reifenmischungen.

## Claims

1. Carbon-containing material having organic groups, **characterized in that** it is obtainable by the reaction of carbon-containing material with organic compounds of the general formula I,
R¹-N=N-R² (I)
in which R¹ and R² may be identical or different and are aryl groups which are unsubstituted or substituted by acceptor or donor substituents, with the exception of carbon-containing material having organic groups obtainable by the reaction of carbon-containing material with organic compounds of the formula 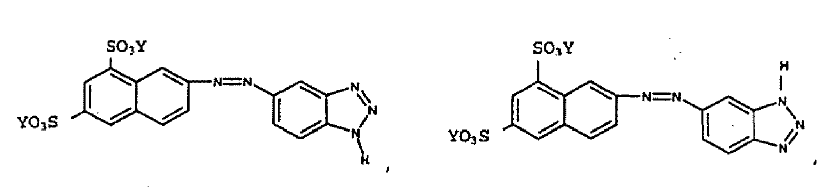 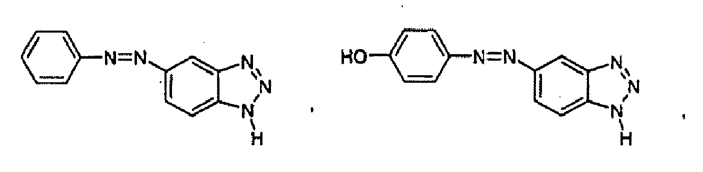 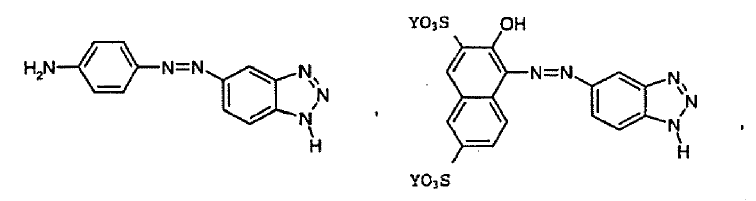 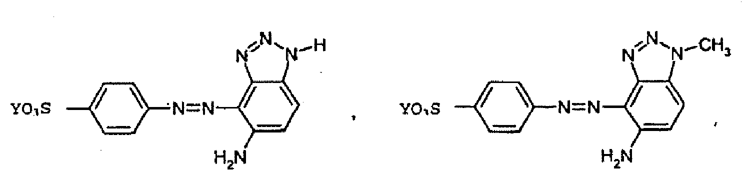 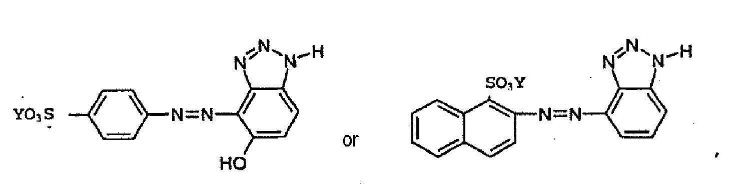 where Y = H, metalⁿ⁺ (n = 1-3) or N⁺R' and R' is H, alkyl, aryl or functionalized alkyl or aryl.

2. Carbon-containing material having organic groups according to Claim 1, **characterized in that** the acceptor substituents are -COOR³, -CO-R³, -CN, -SCN, -NCS, -NCO, -SO₂R³, -SO₂OR³, where R³ = H, alkyl, aryl or functionalized alkyl or aryl.

3. Carbon-containing material having organic groups according to Claim 1, **characterized in that** the donor substituents are alkyl or aryl groups, OR⁴, N(R⁴)₂, SR⁴, -S-S-R⁴ or P(R⁴)₂, in which R⁴ is identical or different and consists of H, alkyl, aryl or functionalized alkyl or aryl.

4. Process for the preparation of the carbon-containing material having organic groups according to Claim 1, **characterized in that** carbon-containing material is reacted with organic compounds of the general formula I.

5. Dispersion, **characterized in that** it contains the carbon-containing material having organic groups according to Claim 1.

6. Dispersion according to Claim 5, **characterized in that** it contains additives.

7. Use of the carbon-containing material having organic groups according to Claim 1 as a filler, reinforcing filler, UV stabilizer, conductive carbon black or pigment.

8. Use of the carbon-containing material having organic groups according to Claim 1 in rubber, plastic, printing inks, inks, inkjet inks, toners, lacquers, paints, paper, bitumen, concrete and other building materials.

9. Use of the carbon-containing material having organic groups according to Claim 1 in tyre mixtures.

## Revendications

1. Matière carbonée comportant des groupes organiques, **caractérisée en ce qu'**elle peut être obtenue par la réaction d'une matière carbonée avec des composés organiques de formule générale I
R¹-N=N-R² (I)
dans laquelle R¹ et R² peuvent être identiques ou différents et sont des groupes aryle non substitués ou substitués par des accepteurs ou des donneurs, à l'exclusion d'une matière carbonée comportant des groupes organiques, pouvant être obtenue par la réaction d'une matière carbonée avec des composés organiques de formule 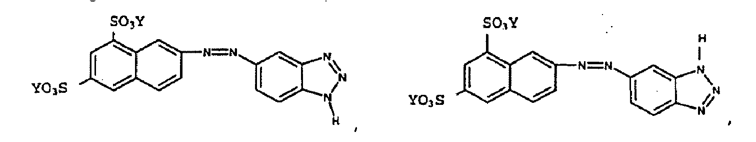 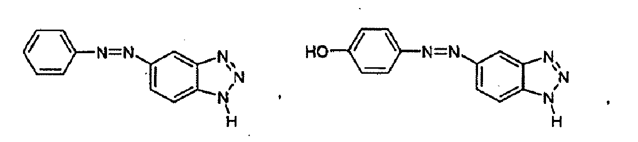 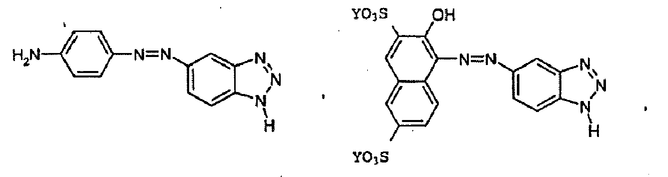 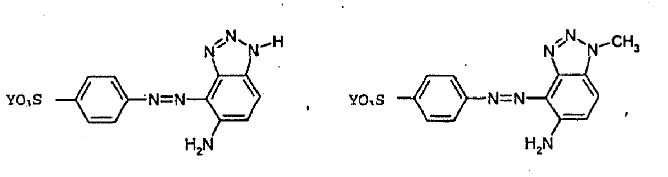 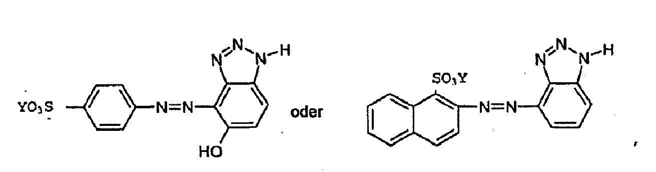 ou
où Y = H, un métalⁿ⁺ (n = 1-3) ou N⁺R' et R' représente H, un groupe alkyle, aryle ou alkyle ou aryle fonctionnalisé.

2. Matière carbonée comportant des groupes organiques selon la revendication 1, **caractérisée en ce que** les substituants accepteurs sont -COOR³, -CO-R³, -CN, -SCN, -NCS, -NCO, -SO₂R³, -SO₂OR³, où R³ = H, un groupe alkyle, aryle ou alkyle ou aryle fonctionnalisé.

3. Matière carbonée comportant des groupes organiques selon la revendication 1, **caractérisée en ce que** les substituants donneurs sont des groupes alkyle ou aryle, OR⁴, N(R⁴)₂, SR⁴, -S-S-R⁴, ou P(R⁴)₂, R⁴ étant le même ou différent et consistant en un atome d'hydrogène ou en un groupe alkyle, aryle ou alkyle ou aryle fonctionnalisé.

4. Procédé pour la préparation de la matière carbonée comportant des groupes organiques selon la revendication 1, **caractérisée en ce qu'**on fait réagir la matière carbonée avec des composés organiques de formule générale I.

5. Dispersion, **caractérisée en ce qu'**elle contient la matière carbonée comportant des groupes organiques selon la revendication 1.

6. Dispersion selon la revendication 5, **caractérisée en ce qu'**elle contient des additifs.

7. Utilisation de la matière carbonée comportant des groupes organiques selon la revendication 1, en tant que charge, charge de renforcement, stabilisant UV, noir de carbone conducteur ou pigment.

8. Utilisation de la matière carbonée comportant des groupes organiques selon la revendication 1, dans un caoutchouc, une matière plastique, des encres d'imprimerie, des encres, des encres pour impression par jet d'encre, des toners, des peintures, des couleurs, du papier, des bitumes, du béton et d'autres matériaux de construction.

9. Utilisation de la matière carbonée comportant des groupes organiques selon la revendication 1, dans des compositions pour pneumatiques.
